# EUROPÄISCHE PATENTSCHRIFT

(11) **EP 3 193 117 B1**
(45) Veröffentlichungstag und Bekanntmachung des Hinweises auf die Patenterteilung: **27.02.2019**
(21) Anmeldenummer: 17000035.0
(22) Anmeldetag: 10.01.2017
(51) Int. Cl.: F28D 20/02, F28D 7/02, F28D 20/00

(54) **WÄRMETAUSCHERVORRICHTUNG**
HEAT EXCHANGE DEVICE
ÉCHANGEUR DE CHALEUR

(30) Priorität: 13.01.2016 DE 102016000176
(43) Veröffentlichungstag der Anmeldung: 19.07.2017
(73) Patentinhaber: Schackert, Alexander, 31246 Ilsede (DE)
(72) Erfinder: Schackert, Alexander, 31188 Holle (DE)
(74) Vertreter: Ahrens, Thomas

(56) Entgegenhaltungen:
- EP-A2- 2 503 251
- DE-U1-202010 015 153

## Beschreibung

Die vorliegende Erfindung betrifft eine Wärmetauschervorrichtung für einen Energiespeicher, der als Teil einer Einrichtung zur Temperierung eines Gebäudes oder eines sonstigen Verbrauchers verwendet werden kann. Dabei wird bevorzugterweise ein dichteanomalisches Speichermedium verwendet, wie beispielsweise Wasser.

Wärmespeicher, die zur Temperierung, also zur Erwärmung und/oder Kühlung von Gebäuden oder anderen Verbrauchern dienen, sind schon lange bekannt. So ist bereits aus der deutschen Offenlegungsschrift DE 28 03 458 A1 ein Energiespeichersystem bekannt, bei dem ein Energiespeicher in Kombination mit einer Wärmepumpe eingesetzt wird. Der Energiespeicher umfasst einen Erdspeicher, in dem Solarenergie gespeichert wird.

Aus der deutschen Gebrauchsmusterschrift DE 20 2010 015 153 U1 ist ein Fluidwärmetauscher bekannt, bei dem innerhalb eines Tanks eine oder mehr als eine Wärmeaustauschvorrichtung vorgesehen sind. Diese können zwei oder mehr Flusswege aufweisen, die reihengeschaltet, parallelgeschaltet oder reihenparallelgeschaltet werden.

Es ist außerdem bekannt, dass Wärmespeicher besonders effektiv sind, wenn sie als Latentspeicher betrieben werden. Dabei wird der Phasenwechsel eines Speichermediums ausgenutzt - genauer die dabei speicherbare bzw. freigesetzte Energie. So ist aus der deutschen Offenlegungsschrift DE 32 24 854 A1 beispielsweise bekannt, als Speichermedium Paraffin zu verwenden und den zugehörigen Schmelzvorgang im Bereich von 40 bis 90 Grad Celsius zur Erhöhung der Wärmespeicherkapazität zu nutzen.

Es ist weiterhin bekannt, auch den Phasenwechsel von Wasser als Speichermedium zu nutzen. So offenbart die europäische Offenlegungsschrift EP 031 942 A1 eine Vorrichtung, bei der ein Wärmespeicher im Erdreich eingegraben ist und eine Flüssigkeitsfüllung, wie vorzugsweise Wasser, enthält. Beim Übergang von der flüssigen Phase in die feste Phase (Eis) werden erhebliche Wärmemengen erzeugt. Während beispielsweise oberhalb des Gefrierpunktes bei der Abkühlung von Wasser etwa 1 kcal pro Liter Wasser frei wird, gibt die gleiche Wassermenge bei der Gefriertemperatur (ca. 0 Grad Celsius) beim vollständigen Übergang von Wasser zu Eis ca. 80 kcal ab.

Es ist weiterhin bekannt, dass festes Eis eine geringere Dichte als flüssiges Wasser hat, so dass es bei dem Gefrieren von Wasser zu einer Ausdehnung kommt, die zu einer Sprengwirkung führen kann. Das kann zu Beschädigungen von Dingen führen, die mit dem entstehenden Eis benachbart sind. Dabei kann insbesondere auch ein Behälter beschädigt werden, in dem sich das Speichermedium Wasser bzw. Eis befindet. So beschreibt die europäische Patentschrift EP 1 807 672 B1 einen Energiespeicher sowie auch eine zugehörige Wärmetauscheranordnung bei der ein Latentspeicher verwendet wird, bei dem bevorzugterweise Wasser als Speichermedium eingesetzt wird. Dort soll eine Sprengwirkung auf ein Gehäuse beim Einfrieren des Speichermediums vermieden werden, indem Wärmetauscherrohre in mehreren Ebenen so gewickelt sind, dass in einem inneren, zentralen Bereich ein geringerer Abstand zwischen den im Wesentlichen konzentrischen Wicklungen eingestellt ist als in einem umfangsnahen Bereich der Ebenen. Es ist auch möglich, dass Wärmetauscherrohre in einem bodennahen Bereich so angeordnet sind, dass sie ein Halbkugelprofil ergeben. Das soll den Vorteil haben, dass beim Einfrieren des Wassers sich eine aus Eis gebildete Halbkugel bildet, die nach außen und nach oben auch über die zugehörige Wärmetauscheranordnung wachsen kann.

Die in EP 1 807 672 B1 vorgestellte Erfindung erlaubt es auch, das dortige System so zu betreiben, dass ein Verbraucher, wie insbesondere ein Gebäude, gekühlt werden kann, indem thermische Energie aus dem Verbraucher dem kühlem, d.h. energieärmeren, Speichermedium (Wasser oder Eis) zugeführt wird. Dafür erfolgt eine Umschaltung verschiedener Ventile und Pumpen sowie zugehöriger Mittel.

Es ist die Aufgabe der vorliegenden Erfindung, eine wirkungsvolle Wärmetauschervorrichtung für einen Energiespeicher zu realisieren, die einfach und kostengünstig hergestellt werden kann.

Diese Aufgabe wird gelöst durch die Erfindung nach Anspruch 1. Durch die abhängigen Unteransprüche werden vorteilhafte Weiterentwicklungen angegeben. Die Erfindung hat außerdem den Vorteil, dass Befestigungspunkte vermieden werden können, die die Wärmetauschervorrichtung zur Fixierung mit einem Behälter verbinden. In bekannten Vorrichtungen werden hierzu Befestigungselemente, wie Schrauben oder dergleichen verwendet, die üblicherweise in die Behälterwandung oder in den Behälterboden geschraubt oder sonstwie befestigt werden. Dadurch wird jedoch die Stabilität der Begrenzungsflächen des Speicherbehälters geschwächt. Bei bestimmungsgemäßen Betrieb der bekannten Latentwärmespeicher entstehen an diesen Befestigungspunkten Zugkräfte, welche auf den Speicherbehälter übertragen werden. Außerdem ist in diesen Bereichen durch das eingebrachte Befestigungselement die Reststärke der Wandung reduziert und stellt so einen Schwachpunkt dar.

Die erfindungsgemäße Wärmetauschervorrichtung weist zunächst eine erste Wärmetauscheranordnung auf, welche zwei Arten von Wärmetauschern enthält. Diese werden im Folgenden auch Wärmetauscher erster Bauart - oder innerer Wärmetauscher - bzw. Wärmetauscher zweiter Bauart - oder äußerer Wärmetauscher - genannt. Der Wärmetauscher erster Bauart enthält einen ersten Leitungsabschnitt, der spiralförmig verläuft und somit eine Spirale bildet. Der Verlauf dieser Spirale wird bestimmt durch geeignete mechanische Mittel. Diese umfassen bevorzugterweise ein zentrales Standrohr, eine Vielzahl von Außenstützen sowie Querstreben, die das Standrohr und die Außenstützen miteinander verbinden.

Der spiralförmig verlaufende Leitungsabschnitt ist an einem ersten Endstück (Zufluss) direkt oder indirekt verbunden mit einer Zuleitung, die somit ein flüssiges, energieärmeres Übertragungsmedium von außen, wie insbesondere von einer Wärmepumpe, in die Spirale einleiten kann. Das andere Endstück (Abfluss) des ersten Leitungsabschnitts ist direkt oder indirekt mit einer Ableitung verbunden, die das durch die Spiralleitung geflossene Übertragungsmedium aufnehmen und direkt oder indirekt weiterleiten kann an ein erstes Endstück (Zufluss) des Wärmetauschers der zweiten Bauart. Dabei verläuft die Zuleitung innerhalb der Spirale des Wärmetauschers erster Bauart - und zwar bevorzugterweise im Wesentlichen parallel zu ihrer Längsachse - und ist mit ihr verbunden an einer Stelle, die sich im betriebsbereiten Zustand am unteren Ende der Spirale befindet. Das zweite Endstück (Abfluss) des Wärmetauschers der zweiten Bauart ist bevorzugterweise direkt oder indirekt verbunden mit der Wärmepumpe.

Der vorliegenden Erfindung liegt folgende Erkenntnis zugrunde.

Über die Zuleitung fließt das energieärmere Wärmeübertragungsmedium von der Wärmepumpe dem Energiespeicher im Zentrum an dem zentralen Standrohr des Wärmetauschers der ersten Bauart zu und wird im unteren Bereich der Spirale - also quasi im Bereich des Behälterbodens - über die Spirale den Wärmetauschern der zweiten Bauart über die jeweiligen Zuleitungen in gleicher Nähe des Standrohres des inneren Wärmetauschers zugeführt. Hierdurch wird durch die große Oberfläche im Zentrum und die höheren Temperaturdifferenzen zwischen Speichermedium (Wasser oder ähnlich) und dem Wärmeübertragungsmedium (in den Rohren) ein höherer Energiefluss und somit eine stärkere Abkühlung des Speichermediums im Zentrum gewährleistet. Weiterer Energieentzug erfolgt über die Wärmetauscher der zweiten Bauart, die das energiereichere Wärmeübertragungsmedium der Wärmepumpe für den Wärmeprozess wieder zuführen. Kontinuierlicher Energieentzug durch den Wärmepumpenbetrieb reduziert die Kapazität des Speichermediums (Wasser) bzw. entlädt das Speichermedium. Bei ca. 0°C beginnt der Aggregatswechsel des Speichermediums Wasser von flüssig zu fest über die erhöhte Wärmetauscherfläche und die Fließrichtung des energieärmeren Wärmeübertragermediums von der Wärmepumpe kommend im Zentrum des Wärmetauschersystems innerhalb der Spirale des inneren Wärmetauschers an den Zulaufrohren sowie am Beginn der Spirale. Weiterer Energieentzug steigert die Eisbildung und lässt das Eis am Wärmetauscher erster Bauart von innen nach außen und von unten nach oben wachsen. Da erfindungsgemäß bevorzugterweise ein dichteanomalisches Speichermedium, wie beispielsweise Wasser, verwendet wird, bewirkt der feste Aggregatzustand (Eis) einen Auftrieb, der dem Gewicht des Wärmetauschers entgegen wirkt.

Außerdem wirkt weiteres Eiswachstum stabilisierend auf die Anordnung der Wärmetauscherflächen des Wärmetauschers erster Bauart. Ab einem gewissen Betriebspunkt überträgt sich der Energiezustand des Speichermediums auch auf den bzw. die benachbarten bzw. umliegenden Wärmetauscher zweiter Bauart, die bevorzugterweise über ihre flexiblen Zuleitungen von innen nach außen über ihre jeweilige Spirale sowie auch von innen nach außen und von unten nach oben vereisen - bzw. allgemeiner gesagt: das sie umgebende Speichermedium ändert dort seinen Aggregatzustand von flüssig nach fest. Diese Anordnung gewährleistet eine relativ gleichmäßige Temperaturverteilung über das Volumen des Speichermediums des Energiespeichers und vermeidet sicher die zerstörerische Sprengwirkung auf die vorzugsweise zylindrische Umschließungsfläche (Wandung) des Speicherbehälters, in dem sich die Wärmetauscheranordnung bzw. die Wärmetauschervorrichtung befindet.

Weitere Eisbildung steigert die Stabilität der Wärmetauscheranordnung und erhöht dessen Auftriebskraft, bis das System innerhalb des Speichermediums (Wasser) zu schweben beginnt und zur Oberfläche aufsteigt und die Wandung des Speicherbehälters über das restliche flüssige Speichermedium vor der Sprengwirkung der weiteren Eisbildung schützt. Durch die Volumenänderung der Eisbildung wird das flüssige Speichermedium teilweise verdrängt. Weiterer Energieentzug lässt den schwebenden, thermisch entladenen Eisblock weiter wachsen, bis die Eintauchtiefe des thermisch entladenen Eisblockes die Höhe des Wasserspiegels überschreitet und der thermisch entladene Eisblock unten aufsetzt, bevorzugterweise auf den Boden eines Behälters, in dem sich Wärmetauscheranordnung befindet.

Für die Realisierung der Erfindung ist es besonders vorteilhaft, ein dichtanomalisches Speichermedium zu verwenden. Obwohl an vielen Stellen der Erfindungsbeschreibung Wasser als derartiges Speichermedium genannt wird, ist die vorliegende Erfindung jedoch keinesfalls auf das Speichermedium Wasser beschränkt. Es kann zusätzlich oder stattdessen auch jedes andere Speichermedium verwendet werden, bei dem während des Übergangs von dem flüssigen in den festen Zustand zumindest anfänglich eine geringere Dichte vorhanden ist.

Um die Vereisung im Bereich des Wärmetauschers zweiter Bauart zu verbessern ist es vorteilhaft, dessen Wärmetauscherfläche in seinem Inneren zu erhöhen. Das kann auf verschiedene Weise erfolgen, wie beispielsweise durch die Realisierung einer engeren Spirale, durch spiralenförmige U-Leitungen oder dergleichen. Besonders bewährt hat sich dafür bei einer Weiterbildung der vorliegenden Erfindung die Anordnung von einer oder von mehreren Rohrschlangen innerhalb der Spirale des Wärmetauschers zweiter Bauart, über die das Übertragungsmedium von dem Wärmetauscher der ersten Bauart in die Spirale des Wärmetauschers der zweiten Bauart geleitet wird. Dabei sind die Rohrschlangen bevorzugterweise u-förmig, wobei die U-Schenkel nahezu parallel zu der Längsachse der zugehörigen Spirale verlaufen und die zugehörige U-Wölbung im betriebsbereiten Zustand nach oben zeigt.

Bei einer Weiterentwicklung der Erfindung ist zusätzlich zu der ersten Wärmetauscheranordnung (mit den Wärmetauschern der ersten und der zweiten Bauart) eine weitere Wärmetauscheranordnung vorgesehen. Diese befindet sich während des Betriebes der Energiespeichervorrichtung in thermischen Kontakt zu mindestens einem der übrigen Wärmetauscher, was bevorzugterweise über das Speichermedium (Wasser bzw. Eis) erfolgt. Diese Wärmetauscheranordnung ist bevorzugterweise derart ausgelegt und angeordnet, dass sie dem Speichermedium thermische Energie von einer zweiten thermischen Quelle zuführen kann, wie beispielsweise von einem Solarkollektor/-absorber, einer Wärmepumpe, aus Abwärme von Lüftungsanlagen, Heizkraftwerken, Industrieanlagen und/oder dergleichen.

Es ist weiterhin besonders vorteilhaft, wenn sich die erste Wärmetauscheranordnung (sowie auch die ggf. vorhandene zweite Wärmetauscheranordnung) in einem Raum - oder auch in einem Behälter mit ggf. eigener Wandung - befindet, der nach unten wasserdicht verschlossen ist und im oberen Bereich einen Überlauf aufweist. Dadurch kann erreicht werden, dass das Speichermedium sich nach oben maximal bis zu dem Überlauf ausdehnen kann. Somit kann auch ein Raum definiert werden, in dem sich kein Speichermedium, sondern stattdessen üblicherweise Luft befindet - ein sogenannter Luftraum.

Die zweite Wärmetauscheranordnung ist bevorzugterweise innerhalb des genannten Raumes ortsfest angeordnet. Es ist jedoch auch möglich, dass sie mechanisch mit der ersten Wärmetauscheranordnung verbunden ist und sich somit auch zusammen mit ihr bewegen kann, wie insbesondere beim Schweben innerhalb des Speichermediums.

Das Gerüst für die Realisierung der Spiralen kann verschiedene mechanische Elemente enthalten, wie das erwähnte Standrohr, eine Vielzahl von Außenstützen sowie zugehörige Streben. Für die Betriebssicherheit der erfindungsgemäßen Vorrichtung ist es notwendig, dass die Dichte und damit der Auftrieb der ersten Wärmetauscheranordnung dem Speichermedium angepasst werden kann. Das ist beispielsweise möglich, indem in das Innere der genannten Elemente ein Material eingefüllt werden kann, dessen Dichte größer ist als die des flüssigen Speichermediums. Besonders bewährt dafür hat sich Beton, Metall oder ähnliches. Es ist natürlich ebenfalls möglich, dass Beschwerungselemente an anderen Stellen der Wärmetauscheranordnung befestigt werden.

Sofern die erste Wärmetauscheranordnung und die zweite Wärmetauscheranordnung mechanisch miteinander verbunden sind, kann die Dichte der Kombination beider Wärmetauscheranordnungen angepasst werden, indem in das Innere der mechanischen Elemente der ersten Wärmetauscheranordnung und/oder in das Innere von mechanischen Elementen der zweiten Wärmetauscheranordnung ein Material eingefüllt wird, dessen Dichte größer ist als die des flüssigen Speichermediums. Auch bei einer solchen Realisierung ist es natürlich ebenfalls möglich, dass Beschwerungselemente an anderen Stellen der Wärmetauscheranordnungen befestigt werden.

Weitere Einzelheiten und Vorteile der vorliegenden Erfindung werden im Folgenden anhand von bevorzugten Ausführungsbeispielen mit zugehörigen Abbildungen erläutert. Dabei zeigen:
- Fig. 1: eine Einrichtung zur Temperierung
- Fig. 2: seitliche Querschnittsdarstellung eines bevorzugten Wärmespeichers
- Fig. 3: symbolische Darstellung einer Doppelhelix
- Fig. 4: Draufsicht auf den Wärmespeicher
- Fig. 5: vereinfachte Querschnittsdarstellung des Wärmespeichers ohne Vereisung
- Fig. 6: vereinfachte Querschnittsdarstellung des Wärmespeichers mit Vereisung
- Fig. 7: symbolische Darstellung eines ersten erweiterten Wärmetauschersystems
- Fig. 8: symbolische Darstellung eines zweiten erweiterten Wärmetauschersystems

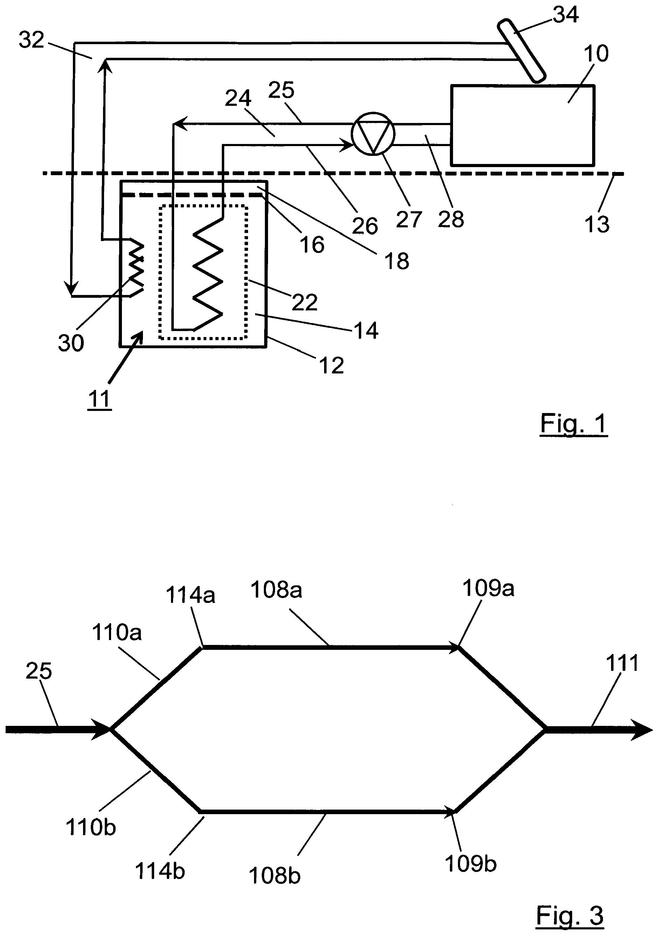

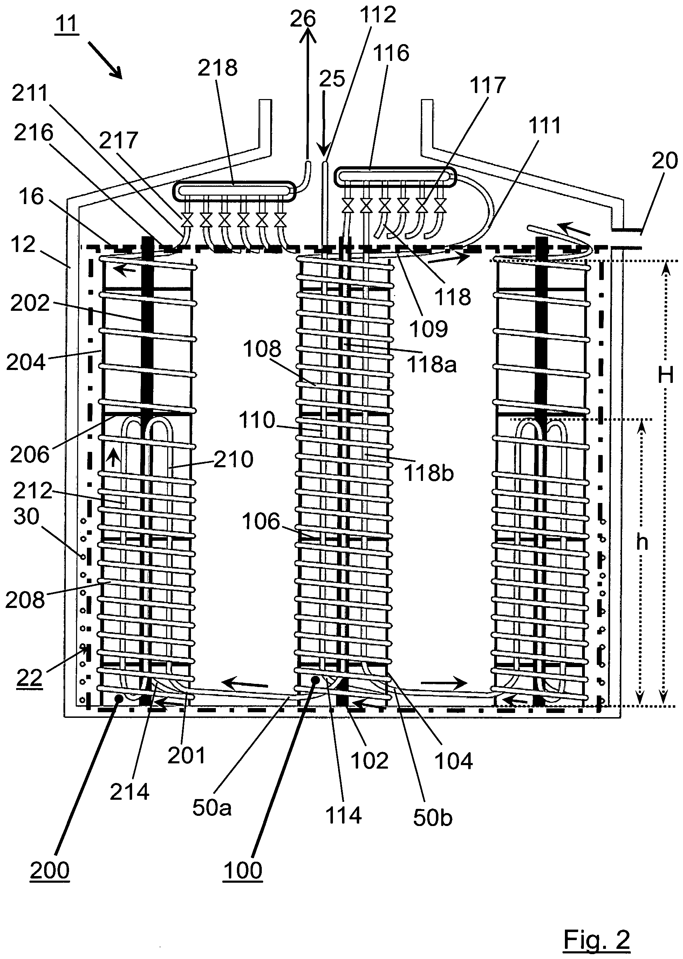

In Fig. 1 ist eine Einrichtung zur Temperierung - das heißt zur Erwärmung oder zur Kühlung - eines Gebäudes 10 (oder eines sonstigen Verbrauchers) dargestellt. Diese Einrichtung umfasst einen Behälter 11 für einen Energiespeicher, der im Folgenden auch Wärmespeicher genannt wird. Der Wärmespeicher-Behälter 11 hat eine Wandung 12, befindet sich unterhalb einer Erdoberfläche 13 und ist größtenteils mit einem Speichermedium 14 gefüllt, das üblicherweise Wasser ist. Oberhalb der Wasseroberfläche 16 befindet sich ein Luftraum 18, der mit Luft gefüllt ist. Die Lage der Wasseroberfläche 16 wird durch die Position eines Überlaufs 20 bestimmt (s. beispielsweise Fig. 2). Unterhalb der Wasseroberfläche 16 befindet sich eine erste Wärmetauscheranordnung 22. Diese ist als Entzugswärmetauscher ausgebildet und besteht aus einer Kombination aus einem inneren Wärmetauscher 100 und mehreren äußeren Wärmetauschern 200 (s. Fig. 2). Die Wärmetauscheranordnung 22 ist über ein erstes Leitungssystem 24 - bestehend aus einer Wärmetauscher-Zuleitung 25 und einer Wärmetauscher-Rückleitung 26 - mit einer Wärmepumpe 27 verbunden. Auf der anderen Seite der Wärmepumpe 27 ist über ein zweites Leitungssystem 28 das Gebäude 10 angeschlossen, das über eine geeignete Anlage (hier nicht dargestellt) mit der gewünschten thermischen Energie - warm oder kalt - versorgt wird und diese innerhalb des Gebäudes 10 verteilt.

In dem Wärmespeicher-Behälter 11 befindet sich bei der bevorzugten Ausführung eine zweite Wärmetauscheranordnung 30. Diese ist über ein weiteres Leitungssystem 32 mit einer thermischen Quelle 34 verbunden. Eine solche thermische Quelle 34 kann auf vielfältige Weise realisiert sein. In dem bevorzugten Ausführungsbeispiel ist die thermische Quelle 34 eine regenerative Quelle wie z.B. ein Absorber oder insbesondere ein Solarkollektor. Daher wird die zweite Wärmetauscheranordnung im Folgenden als Solar-Wärmetauscheranordnung 30 bezeichnet.

Der Solarkollektor 34 ist derart ausgebildet, dass er ein geeignetes Übertragungsmedium, wie ein Gemisch aus Wasser und Frostschutzmittel, erwärmt. Dieses Übertragungsmittel wird über das Leitungssystem 32 der Solar-Wärmetauscheranordnung 30 zugeführt, die sich innerhalb des Speichermediums Wassers 14 befindet und die dem Speichermedium 14 entnommene Energiemenge wieder zuführt bzw. dieses entsprechend erwärmt.

Der Vollständigkeit halber sei erwähnt, dass in den Leitungssystemen 24, 28, 32 noch weitere Mittel enthalten sind, wie Pumpen, verschiedene Ventile, Anschlussverbindungen und dergleichen. Da diese nicht erfindungswesentlich sind, sind sie hier aus Gründen der Übersichtlichkeit nicht dargestellt.

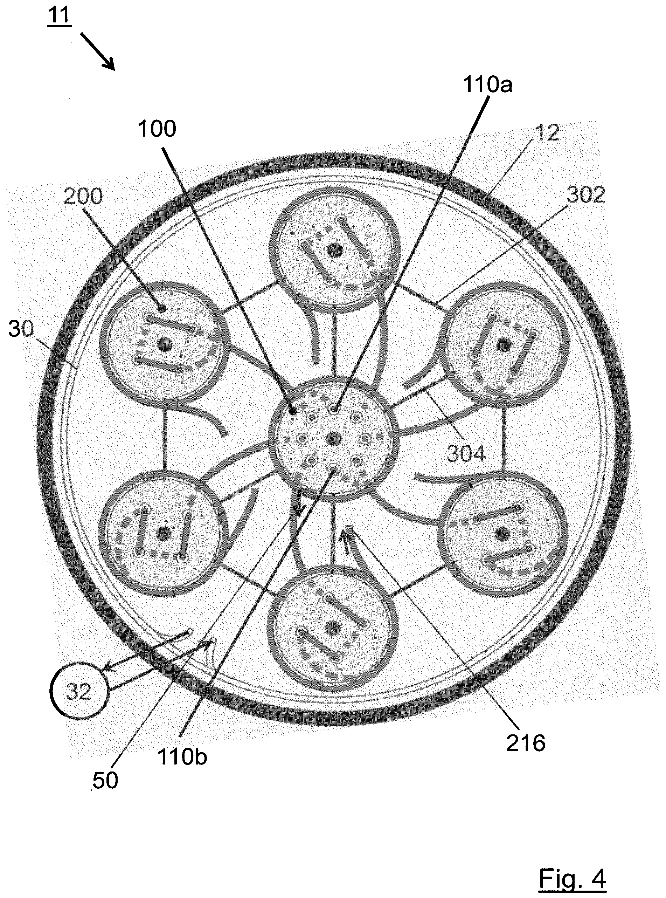

Fig. 2 zeigt eine Seitenansicht auf den bevorzugten Wärmespeicher bzw. den Wärmespeicher-Behälter 11. Dessen Wandung 12 weist - bezogen auf die Draufsicht - einen runden Querschnitt auf (s.a. Fig. 4) und hat eine zylindrische Form mit einem wasserdichten Boden an der Unterseite. Die darin enthaltene Wärmetauscheranordnung 22 umfasst einen inneren Wärmetauscher 100 sowie sechs äußere Wärmetauscher 200, wovon hier nur zwei dargestellt sind. Diese sechs äußeren Wärmetauscher 200 sind innerhalb des genannten Wärmespeichers bevorzugterweise hexagonal in Form eines Sechsecks angeordnet (s.a. Fig. 4), da in dieser Anordnung der gleichmäßige Abstand der Wärmetauscher 100, 200 untereinander sichergestellt ist und in Abhängigkeit der Behältergröße eine Kaskadierung der Wärmtauscheranordnung 22 ermöglicht. Durch einen Überlauf 20 in der Wandung 12 wird die Höhe der Wasseroberfläche 16 bestimmt.

Die in Fig. 2 dargestellten Pfeile deuten die jeweilige Flussrichtung der in den Schlauchleitungen enthaltenen Flüssigkeit während des Normalbetriebs der Anlage an der betreffenden Stelle an. Unter Normalbetrieb wird hier der Betrieb verstanden, bei dem Energie aus dem in Behälter 11 vorhandenen Wärmespeicher mittels der Wärmepumpe 27 entzogen und dem Gebäude 10 zugeführt wird.

Der in Fig. 2 gezeigte innere Wärmetauscher 100 weist eine mechanische Struktur auf, die im Wesentlichen besteht aus einem zentralen Standrohr 102, vier Außenstützen 104 sowie aus einer Vielzahl von Querstreben 106, die bevorzugterweise scheibenförmig ausgebildet sind und die Außenstützen 104 mit dem zentralen Standrohr 102 mechanisch verbinden. Das zentrale Standrohr 102 ist so beschaffen, dass es der natürlichen Auftriebskraft der Wärmetauscheranordnung 22 - oder bei Verbindung der beiden Wärmetauscheranordnungen 22, 30 miteinander (siehe unten) des gesamten Wärmetauschersystems, also der Wärmetauscheranordnung 22 in Verbindung mit der Solarwärmetauscheranordnung 30 - dem Speichermedium 14 entgegen wirkt. Bei Wasser als Speichermedium haben sich hier handelsübliche PE-Rohre mit entsprechender Massefüllung (wie z.B. Betongemische) als geeignet erwiesen.

Mit der mechanischen Struktur ist eine Schlauchleitung verbunden, deren Verlauf sich in verschiedene Abschnitte unterteilen lässt, nämlich
- eine Spirale 108 mit einem unteren Endstück 114 (Zufluss) und einem oberen Endstück 109 (Abfluss). Die Spirale kann auch als Doppelhelix ausgebildet sein (s. Fig. 3)
- eine nahezu senkrecht nach unten verlaufende Zuleitung 110, an deren Eingang 112 die Wärmetauscher-Zuleitung 25 angeschlossen ist und an deren Ausgang das untere Endstück 114 der Spirale 108 angeschlossen ist
- ein Verteilerelement 116, das mit dem oberen Endstück 109 der Spirale 108 verbunden ist und die aus der Spirale 108 fließende Wärmeübertragungsflüssigkeit an vorzugsweise sechs Ableitungen 118 abgeben kann, in die hier jeweils ein Ventil 117 angeordnet ist
- zwei dieser Ableitungen 118 - mit 118a bzw. 118b markiert - dienen zum Anschluss der beiden in Fig. 2 gezeigten äußeren Wärmetauscher 200. Die Ausgänge der Ableitungen 118a bzw. 118b führen jeweils innerhalb der Spirale des inneren Wärmetauschers 100 zu einer vorzugsweise flexiblen Verbindungsleitung 50a bzw. 50b, an die jeweils einer der äußeren Wärmetauscher 200 angeschlossen ist.
Hierzu sei angemerkt, dass die Anzahl der tatsächlichen - nicht der hier gezeigten - Ableitungen 118 üblicherweise direkt abhängig ist von der Anzahl der an den inneren Wärmetauscher 100 angeschlossenen äußeren Wärmetauscher 200. Daher sind üblicherweise mehr als zwei der Ableitungen 118 und der zugehörigen Verbindungsleitungen 50 vorhanden.

Die Verbindungen zwischen der Zuleitung 110 und der Spirale 108 bei dem unteren Endstück 114 können auf verschiedene Weisen realisiert sein, wie beispielsweise durch eine durchgängige Leitung (bzw. einen durchgängigen Schlauch), die ohne zwischengeschaltete Mittel direkt von der Zuleitung 110 in die Spirale 108 übergeht. Denkbar ist jedoch auch, dass an dem Endstück 114 Verbindungselemente vorgesehen sind, die hier nicht dargestellt und dem Fachmann allgemein bekannt sind. Das gleiche gilt auch für den Übergang an dem oberen Endstück 109 der Spirale 108.

Fig. 2 zeigt auch eine bevorzugte Ausführung für die äußeren Wärmetauscher 200, wovon hier lediglich zwei dargestellt sind. Diese haben - besonders aus Kostengründen - eine vergleichbare mechanische Struktur wie die inneren Wärmetauscher 100 und enthalten ein zentrales Standrohr 202, vier Außenstützen 204 sowie eine Vielzahl von Querstreben 206, die bevorzugterweise scheibenförmig ausgebildet sind und die Außenstützen 204 mit dem zentralen Standrohr 202 mechanisch verbinden. Das zentrale Standrohr 202 ist so beschaffen, dass es in der Summe der natürlichen Auftriebskraft der Wärmetauscheranordnung 22 - bzw. bei entsprechender Anordnung (siehe unten) des gesamten Wärmetauschersystems, bestehend aus den Anordnungen 22 und 30 - in dem Speichermedium 14 entgegen wirkt. Bei Wasser als Speichermedium haben sich hier handelsübliche PE-Rohre mit entsprechender Massefüllung (wie z.B. Betongemische) als geeignet erwiesen.

Mit der mechanischen Struktur ist eine Schlauchleitung verbunden, deren Verlauf sich in verschiedene Abschnitte unterteilen lässt, nämlich
- eine Spirale 208 mit einem unteren Endstück 214 (Zufluss) und einem oberen Endstück 216 (Abfluss),
- eine erste u-förmige Rohrschlange 210, deren U-Schenkel im Wesentlichen senkrecht, das heißt im Wesentlichen parallel zu der Längsachse der Spirale 208, verlaufen und deren erster Anschluss 201 (Zufluss) über eine der Verbindungsleitungen 50 - hier konkret 50a bzw. 50b - mit den Ableitungen 118a bzw. 118b des Verteilerelementes 116 verbunden ist und die in eine zweite u-förmige Rohrschlange 212 mündet, deren U-Schenkel ebenfalls im Wesentlichen senkrecht, das heißt im Wesentlichen parallel zur Längsachse der Spirale 208, verlaufen, wobei
- der Ausgang der zweiten Rohrschlange 212 mit dem unteren Endstück 214 der Spirale 208 verbunden ist.

Die Rohrschlangen 210, 212 weisen ihren Bogen am oberen Ende auf und haben bevorzugterweise eine gleiche Höhe h. Jedoch können sie auch unterschiedlich hoch sein. Die Gesamthöhe H der Wärmetauscher 100, 200 ist abhängig von der Wassertiefe, also von dem Abstand der Wasseroberfläche 16 - entspricht üblicherweise der Unterkante von Ablauf 20 - von dem inneren Boden der Wandung 12. Bei einer Wassertiefe von etwa 2 Metern hat sich eine Wärmetauscher-Höhe H von ca. 1,85 Meter bewährt. Die Höhe h der Rohrschlangen 210, 212 sollte geringer sein als die Höhe H der sie umschließenden Spirale 208. Dadurch kann die Betriebssicherheit der Einrichtung erhöht werden, da Lufteinschlüsse vermindert bzw. durch den Strom des Wärmeträgermediums und des geodätischen Höhenunterschiedes mitgerissen und so verhindert werden können. Für das Verhältnis der beiden Werte h und H zueinander hat sich besonders bewährt:
h / H = 1/2 bis 2/3.

Das obere Endstück 216 der Spirale 208 des äußeren Wärmetauschers 200 ist deren Abfluss und führt über eine Ableitung 211 und ein Ventil 217 zu einem Eingang eines weiteren Sammlerelements bzw. Verteilerelements 218. Weitere Eingänge dieses Verteilerelements 218 sind mit entsprechenden Leitungen der anderen äußeren Wärmetauscher 200 verbunden. Der Ausgang dieses Verteilerelements 218 ist über geeignete Mittel an die Wärmetauscher-Rückleitung 26 (s.a. Fig. 1) angeschlossen.

Wie in Fig. 2 auch gezeigt, ist die Wicklungsdichte der Spirale 208 im unteren Bereich höher als im oberen Bereich des Wärmetauschers 200.

Für das bevorzugte Ausführungsbeispiel hat sich sowohl für den inneren Wärmetauscher 100 als auch für die äußeren Wärmetauscher 200 jeweils ein Rohr aus hochwertigem Polyethylen - auch PE Rohr genannt - mit einem Außendurchmesser von 25 mm und einer Wandstärke von ca. 2 mm insbesondere aus Kostengründen besonders bewährt. Denkbar sind jedoch auch Ausführungen mit anderen Rohrmaterialien, wie beispielsweise aus Metall, wie insbesondere Kupfer. Bei hohen Leistungsanforderungen sind außerdem andere Abmessungen bzw. Dimensionen sinnvoll oder notwendig.

Die jeweilige Schlauchleitung von 100 bzw. 200 kann auch aus einer Vielzahl von einzelnen Elementen bestehen, die miteinander auf geeignete Weise verbunden sind. Es ist außerdem möglich, dass zumindest einzelne der oben genannten Abschnitte aus einem anderen Material bestehen, wie beispielsweise Kupfer oder dergleichen. Verbindungselemente, die die Schlauchleitung an der mechanischen Struktur fixieren und/oder einzelne Abschnitte der Schlauchleitung miteinander verbinden, sind in der Zeichnung aus Gründen der Übersichtlichkeit nicht dargestellt.

Es hat sich besonders gut bewährt, wenn der innere Wärmetauscher 100 anstelle einer einzigen Spirale 108 zwei Spiralleitungen aufweist, die quasi eine Doppelhelix bilden. Eine bevorzugte Ausbildung dafür ist symbolisch in Fig. 3 dargestellt. Dabei ist zwischen der Wärmetauscher-Zuleitung 25 und der Zuleitung 110 ein 2-fach Verteilerelement (hier nicht dargestellt) vorgesehen, so dass zwei getrennte Zuleitungen 110a und 110b sowie zugehörige Spiralen 108a und 108b gespeist werden. Diese sind vor dem Abfluss 109 über separate Abflüsse 109a, 109b hydraulisch - bevorzugterweise nach dem Tichelmann-Prinzip - miteinander verbunden, so dass trotz der Doppelhelix-Struktur der innere Wärmetauscher 100 bevorzugterweise einen einzigen Abfluss 109 aufweist, der über die Ableitung 111 zu dem Verteilerelement 116 führt.

Bei der zugehörigen bevorzugten Ausführung wird die Zuleitung 25 vor Eintritt in den inneren Wärmetauscher 100 aufgeteilt in die Zuleitungen 110a, 110b, die innerhalb der Helix 108a, 108b nahezu senkrecht nach unten verlaufen. An zugehörigen Abflüssen 114a, 114b werden sie der zugehörigen Spirale 108a, 108b zugeführt. Die oberen Endstücke 109a, 109b können gemeinsam über Anschluss 109 mit dem Verteilerelement 116 verbunden sein. Es ist jedoch auch möglich, dass jede der Spiralen 108a, 108b mit einem eigenen Verteilerelement 116a, 116b (in den Figuren nicht gezeigt) verbunden ist, deren Ausgänge anteilig die zugehörigen äußeren Wärmetauscher 200 versorgen.

Es hat sich bewährt, dass die Zuleitung 25 und der Abfluss 109 einen größeren Schlauchdurchmesser aufweisen (z.B. PE 32 Schlauch) als die übrigen Elemente 108a, 108b, 110a, 110b (z.B. jeweils PE 25 Schlauch).

Fig. 4 zeigt eine Draufsicht auf den bevorzugten Wärmespeicher-Behälter 11 in Zylinderform. Die darin vorhandene erste Wärmetauscheranordnung 22 weist den inneren Wärmetauscher 100 und sechs der äußeren Wärmetauscher 200 auf, welche hier hexagonal angeordnet sind. Die Zuleitung 25 wird über das oben erwähnte 2-fach Verteilerelement (hier nicht dargestellt) aufgeteilt für die Versorgung des ersten Strangs 110a, der über das Endstück 114a in die Spirale 108a übergeht, sowie des zweiten Strangs 110b, der über das Endstück 114b in die parallel verlaufende Spirale 108b übergeht.

Bei anderen Behälterformen oder Behältergrößen sind zur optimalen Ausnutzung des Speichermediums 14 auch andere Kombinationen der Wärmetauscherelemente 100 und 200 möglich, welche vom Solarwärmetauscher 30 umschlossen werden bzw. bei Kaskadierung der Wärmetauscheranordnung 22, die entweder einzeln für sich quasi als Zelle mit einem Solarwärmetauscher oder insgesamt in der Summe mit nur einem Solarwärmetauscher umschlossen sind. Hierzu sei erwähnt, dass die Energiezufuhr zum Speicher 11 auch durch Abwärme aus technischen Prozessen, durch überschüssige Wärme aus dem Gebäude oder dessen technischen Geräte erfolgen kann. Die erforderliche Energieabfuhr und Einspeicherung von Energie durch Übertragung auf das Speichermedium 14 bestimmen die Art und Anordnung des Solarwärmetauschers.

Die Abflüsse 216 der Spiralen 208 der äußeren Wärmetauscher 200 führen zu dem Sammlerelement 218, welches hier ebenfalls nicht dargestellt ist.

Der innere Wärmetauscher 100 und die äußeren Wärmetauscher 200 sind miteinander mechanisch durch geeignete Verbindungselemente 302, 304, wie Streben und dergleichen verbunden. Diese dienen unter anderem als Abstandshalter und bewirken eine im Wesentlichen starre Verbindung, so dass die Struktur der Wärmetauscheranordnung 22 auch bei Bewegungen, wie insbesondere beim Schweben in einer Flüssigkeit, vollständig oder zumindest annähernd erhalten bleibt.

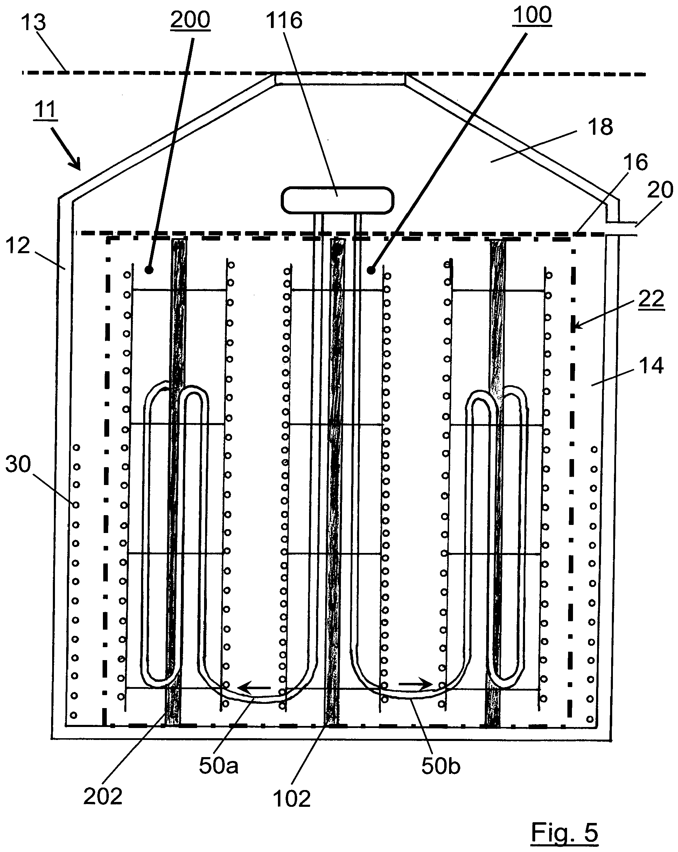

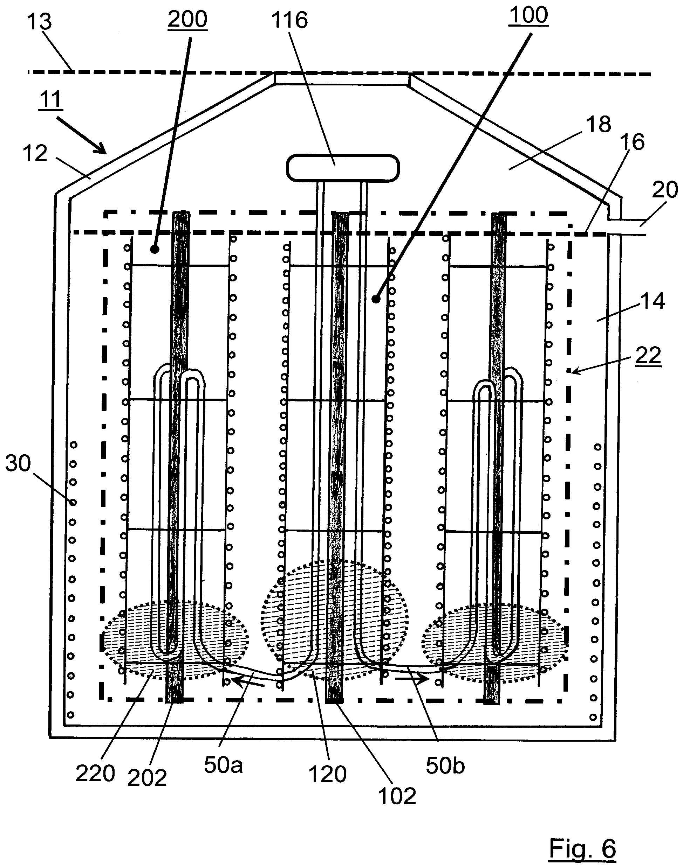

Fig. 5 und 6 zeigen vereinfachte Seitenansichten des Wärmespeichers bzw. des Wärmespeicher-Behälters 11 unterhalb des Erdbodens 13 und zwar bei unterschiedlichen Betriebszuständen. Dabei sind die notwendigen Schlauchelemente und mechanischen Verbindungselemente nur insoweit dargestellt, wie sie für das Verständnis der vorliegenden Erfindung notwendig sind. Insofern wird auch auf die vorherige Beschreibung verwiesen.

Anhand der Fig. 5 und 6 wird im Folgenden auch die Funktion des bevorzugten Ausführungsbeispiels erläutert. Besonders wesentlich bei der Darstellung in den Fig. 5 und 6 ist die relative Position der Wärmetauscheranordnung 22 - im Wesentlichen bestehend aus den Wärmetauschern 100 und 200 - in Relation zu der Wandung 12 und zu der Wasseroberfläche 16.

In den Fig. 5 und 6 sind jeweils der innere Wärmetauscher 100 sowie zwei der äußeren Wärmetauscher 200 gezeigt, die wie zuvor beschrieben, hydraulisch miteinander verbunden sind.

Fig. 5 zeigt den Wärmespeicher-Behälter 11 in einem Betriebszustand, bei dem das Speichermedium 14 - hier Wasser - vollständig flüssig ist. Die Wärmetauscheranordnung 22 hat eine Dichte, die größer ist als die des Speichermediums Wasser 14. Daher setzen die zentralen Standrohre 102 bzw. 202 auf dem Boden der Wandung 12 auf. Wenn die Temperiereinrichtung - und somit auch der Wärmespeicher - betrieben wird um das Gebäude 10 zu erwärmen, entzieht die erste Wärmetauscheranordnung 22 dem Speichermedium Wasser 14 mittels der Wärmepumpe 27 Energie. Die zentralen Standrohre 102 bzw. 202 setzen zunächst auf dem Boden auf, solange dem in Behälter 11 vorhandenen Wärmespeicher nur so viel thermische Energie entnommen wurde, dass das Speichermedium Wasser 14 den Phasenübergang vom flüssigen Zustand zum festen Zustand noch nicht begonnen hat. Dabei ist natürlich auch die Energiemenge zu berücksichtigen, die dem Wärmespeicher zwischenzeitlich zugeführt wird, wie insbesondere durch den Solar-Wärmetauscher 30 und/oder durch andere geeignete thermische Quellen.

Das Gewicht und somit die Dichte der Wärmetauscheranordnung 22 kann auf verschiedene Weisen verändert werden. Es hat sich besonders bewährt, dass die zentralen Standrohre 102 und/oder 202 zumindest teilweise mit Material gefüllt sind, das schwerer ist als das Wasser 14, wie beispielsweise mit Beton. Dadurch kann erreicht werden, dass die Anordnung 22 einerseits bei flüssigem Zustand des Wassers 14 betriebssicher auf den Boden aufsetzt und andererseits bei bestimmter Menge von Eisbildung (s.a. Fig. 6) innerhalb des Wassers 14 zu schweben beginnt.

Der in Behälter 11 vorhandene Wärmespeicher ist zusammen mit der Wärmepumpe 27 derart ausgelegt, dass er als Latentwärmespeicher arbeiten kann und somit die latente Energie bei der Phasenumwandlung von flüssigem Wasser zu Eis ausnutzen kann. Das bedeutet, dass der Wärmespeicher auch in einen Betriebszustand kommen kann, in dem sich Eis innerhalb des Speichermediums Wasser 14 bildet. Ein solcher Betriebszustand ist in Fig. 6 dargestellt.

In Fig. 6 sind eine mittlere Eisablagerung 120 um den mittleren Wärmetauscher 100 sowie je eine äußere Eisablagerung 220 um die beiden äußeren Wärmetauscher 200 symbolisch dargestellt. Da Eis leichter ist als das Wasser 14, führen die Eisablagerungen 120, 220 zu einem Auftrieb. Die Wärmetauscheranordnung 22 ist sowohl vom Gewicht als auch von der mechanischen Beschaffenheit derart ausgelegt, dass dieser Auftrieb ausreichend ist, um die Anordnung 22 durch ein Schweben von dem Boden der Wandung 12 zu entfernen. Die Eisablagerungen 120, 220 bewirken außerdem, dass die Gesamtkonstruktion mechanisch stabilisiert ist.

Das Wachstum des Eises beginnt aufgrund der erfindungsgemäßen Anordnung zunächst im Bereich des inneren Wärmetauschers 100 und erfolgt recht langsam bevor sich das Eiswachstum auf die äußeren Wärmetauscher 200 überträgt. Dadurch können Lufteinschlüsse im Eis vermieden werden, was die mechanische Stabilität entsprechend erhöht.

Aufgrund der angeordneten Rohrschlangen 210, 212 erfolgt die Eisbildung bei den äußeren Wärmetauschern ebenfalls von innen heraus.

Somit lässt sich der Betrieb der bevorzugten Einrichtung zur Temperierung also auch folgendermaßen beschreiben:
Über das Zulaufrohr 25 fließt das energieärmere Wärmeübertragermedium der Wärmepumpe 27 dem Wärmespeicher im Zentrum an dem zentralen Standrohr 102 des inneren Wärmetauschers 100 zu und wird am Behälterboden über die Helix 108 und dem Verteilerelement 116 den äußeren, umliegenden Wärmetauschern 200 über die jeweiligen Leitungen 118 und 50 in gleicher Nähe des Standrohres 102 des inneren Wärmetauschers 100 zugeführt. Hierdurch wird durch die große Wärmeübertragungsfläche im Zentrum des Speichers und die höheren Temperaturdifferenzen zwischen Speichermedium 14 und Wärmeübertragermedium (in der Schlauchleitung) ein höherer Energiefluss und somit eine stärkere Abkühlung des Speichermediums 14 im Zentrum gewährleistet.

Die aus der Leitungsdichte der Spirale 108 (bzw. Mehrfach-Helix) resultierende Wärmeübertragungsfläche sichert im Bereich des inneren Wärmetauschers 100 eine hohe Übertragungsleistung bzw. bedingt durch den Eintritt der energiearmen Wärmeträgerflüssigkeit im Zentrum eine höhere Abkühlung des Speichermediums Wasser 14 als im äußeren Bereich der in Fließrichtung der Wärmeträgerflüssigkeit nachfolgenden äußeren Wärmetauscher 200.

Weiterer Energieentzug erfolgt über die äußeren Wärmetauscher 200, die über das Sammlerelement 218 das energiereichere Wärmeübertragermedium der Wärmepumpe 27 für den Wärmepumpenkreisprozess wieder zuführen. Kontinuierlicher Wärmepumpenbetrieb reduziert die Kapazität des Speichermediums Wasser bzw. entlädt das Speichermedium und bei ca. 0°C beginnt der Aggregatswechsel des Speichermediums Wasser von flüssig zu fest über die erhöhte Wärmetauscherfläche und das energieärmere Wärmeübertragermedium am inneren Wärmtauscher 100 innerhalb der Spirale 108 an den Zulaufrohren sowie am Zufluss 114 der Spirale 108. Weiterer Energieentzug steigert die Eisbildung und lässt das Eis am inneren Wärmetauscher 100 von innen nach außen und von unten nach oben wachsen. Dem Auftrieb des Eises wirkt das Gewicht des zentralen Standrohrs 102 sowie daran befestigter Elemente entgegen. Weiteres Eiswachstum wirkt stabilisierend auf die Anordnung der Wärmetauscherflächen des inneren Wärmetauschers 100.

Ab einem gewissen Betriebspunkt überträgt sich der Energiezustand des Speichermediums Wasser 14 auch auf die umliegenden äußeren Wärmetauscher 200, die in dem Beispiel über die Zuleitungen 118 und die flexiblen Wärmetauscher-Verbindungsleitungen 50 von innen über die Wärmtauscherschlangen 210, 212 nach außen über ihre jeweilige Spirale 208 auch von innen nach außen und von unten nach oben vereisen.

Die aus der Leitungsdichte im unteren Teil des äußeren Wärmetauschers 200 resultierende Wärmeübertragungsfläche sichert in dessen unteren Bereich eine höhere Übertragungsleistung bzw. bedingt durch den Eintritt der energieärmeren Wärmeträgerflüssigkeit im Zentrum eine höhere Abkühlung des Speichermediums 14 als im oberen Bereich der in Fließrichtung der Wärmeträgerflüssigkeit nachfolgenden oberen Teil der Helix 208 des äußeren Wärmetauscher 200, deren Wicklungsdichte zur Oberfläche des Speichermediums ab dem Wendepunkt der senkrecht verlaufenden Rohrschlangen 210, 212 abnimmt bzw. in Abhängigkeit der benötigten Entzugsleistung abnehmen kann.

Diese Anordnung gewährleistet eine relativ gleichmäßige Temperaturverteilung über das Volumen des Speichermediums 14 der Wärmetauscheranordnung 22 bzw. des Energiespeichers und vermeidet sicher die zerstörerische Sprengwirkung auf die vorzugsweise zylindrische Wandung 12 (Umschließungsfläche) des Wärmespeicher-Behälters 11. Weitere Eisbildung steigert die Stabilität der Wärmetauscheranordnung 22 und erhöht deren Auftriebskraft, bis die Wärmetauscheranordnung 22 zu Schweben beginnt und zur Oberfläche 16 aufsteigt. Die Wandung 12 des Behälters 11 wird über das restliche flüssige Speichermedium 14 vor der Sprengwirkung der weiteren Eisbildung geschützt. Weiterer Energieentzug steigert das Eiswachstum. Durch die Volumenänderung der Eisbildung wird das flüssige Speichermedium 14 teilweise verdrängt und der thermisch entladene Eisblock setzt auf den Behälterboden auf bevor der komplette Eisblock die umfassende Behälterwandung 12 erreicht hat.

Bei einer weiteren Ausführungsform ist vorgesehen, dass die zweite Wärmetauscheranordnung 30 nicht fest an der Wandung 12 montiert ist, sondern mechanisch mit der ersten Wärmeaustauscheranordnung 22 verbunden ist, so dass sich die beiden Anordnungen 22 und 30 gemeinsam bewegen können. In einem solchen Fall bewirkt die Eisbildung, dass das gesamte Wärmetauschersystem - bestehend aus der Wärmetauscheranordnung 22 und dem Solarwärmetauscheranordnung 30 - in Abhängigkeit vom Fortschritt der Eisbildung stabilisiert wird und auch eine erhöhte Auftriebskraft erfährt, so dass es bei ausreichender Eisbildung zu schweben beginnen kann. Im Falle einer mechanischen Verbindung beider Wärmetauscheranordnungen 22 und 30 kann außerdem die Dichte dieses Wärmetauschersystems verändert werden, indem in das Innere der mechanischen Elemente 102, 202 der ersten Wärmetauscheranordnung 22 und/oder in das Innere von mechanischen Elementen der zweiten Wärmetauscheranordnung 30 ein Material eingefüllt wird, dessen Dichte größer ist als die des flüssigen Speichermediums Wasser 14.

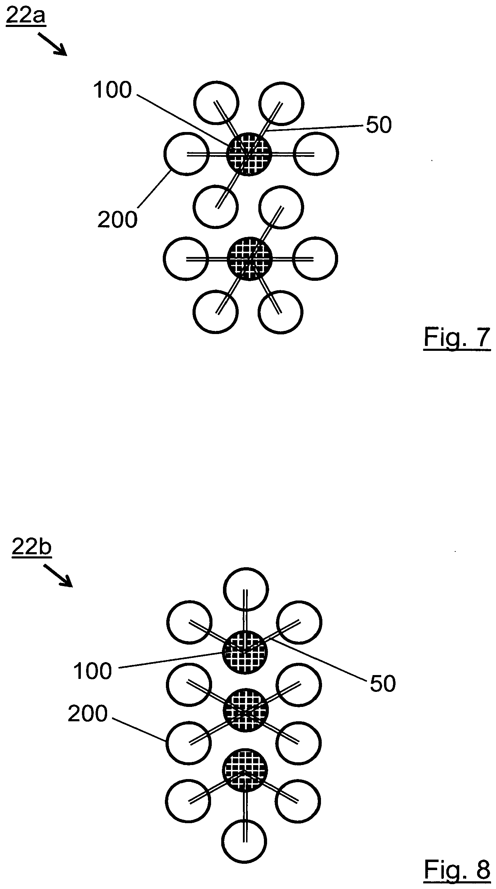

Fig. 7 zeigt eine zweite Ausführung der Wärmetauscheranordnung, die hier mit 22a bezeichnet ist und z.B. für rechteckige oder ovale Speicherbehälter geeignet ist. Diese unterscheidet sich von der in Fig. 4 gezeigten Anordnung dadurch, dass hier zwei innere Wärmetauscher 100 vorgesehen sind, die jeweils mit fünf äußeren Wärmetauschern 200 hydraulisch verbunden sind. Trotzdem ist die 6-eckige hexagonale Wabenstruktur durch die versetzte Aufstellung der identischen Teilsysteme weiterhin vorhanden.

Fig. 8 zeigt eine weitere Ausführung 22b der Wärmetauscheranordnung. Diese ist besonders für sehr gestreckte Behälterformen geeignet. Hier ist eine hexagonalähnliche Struktur realisiert, wenn dabei auch die inneren Wärmetauscher 100 berücksichtigt werden.

Die gesamte Anordnung 22a kann derart gestaltet sein, dass die einzelnen Wärmetauscher 100, 200 und die zugehörigen Elemente mechanisch miteinander verbunden sind; und zwar derart, dass sie gemeinsam in dem Wasser schweben können, wenn eine entsprechende Eisbildung vorhanden ist.

Es sei darauf hingewiesen, dass das beschriebene bevorzugte Ausführungsbeispiel mit seinen genannten Abwandlungen nur beispielhaft ist für die Realisierung der vorliegenden Erfindung. Es sind vielfältige Abwandlungen bzw. Ergänzungen möglich wie beispielsweise:
- Bei warmen Außentemperaturen, wie beispielsweise im Sommer, kann die Einrichtung zur Temperierung auch zum Kühlen eines Verbrauchers - wie dem Gebäude 10 - eingesetzt werden, indem die entsprechende Wärmeenergie von dem Verbraucher 10 in dem Wärmespeicher eingespeichert wird. Dazu kann nach Abschluss des Schmelzprozesses durch die passive Kühlung des Gebäudes 10 durch den Wärmespeicher zur weiteren Kühlung die Wärmepumpe 27 entsprechend aktiv betrieben werden. Dazu sind entsprechende Ventile vorzusehen. Diese sind zwar in den Figuren nicht gezeigt, jedoch dem Fachmann allgemein bekannt, wie beispielsweise aus der Schrift EP 1 807 672 B1.
- Zusätzlich oder anstelle des Solarkollektors 34 können auch andere thermische Quellen verwendet werden, wie beispielsweise
   - ein Absorber,
   - eine Wärmepumpe,
   - Mittel, die Abwärme aufnehmen aus Lüftungsanlagen, Niederschlag, Abluftanlagen, Blockheizkraftwerken und/oder dergleichen,
   - Mittel, die überschüssige Wärme des Gebäudes 10 (oder eines sonstigen Verbrauchers) in den warmen Jahreszeiten aufnehmen (passive Kühlung),
   und/oder dergleichen.
- Die Anzahl der Außenstützen 104 und/oder 204 kann größer oder kleiner als vier sein. Es gilt allgemein, dass eine ausreichende Anzahl der Außenstützen 104, 204 vorhanden sein muss, um die Anordnung und Fixierung der Leitungen sowie die mechanische Stabilität der Wärmetauscher 100, 200 zu ermöglichen.
- Mehrere innere Wärmetauscher 100 können gemeinsam von äußeren Wärmetauschern 200 umgeben sein.
- In Abhängigkeit von Behältergröße und -form sind auch andere Anordnungen der inneren Wärmetauscher 100 und der äußeren Wärmetauscher 200 möglich bzw. wegen der bevorzugten hexagonalen Anordnung auch die Kaskadierung des Wärmetauschersystems 22.
- Bei Verwendung der Doppelhelix innerhalb des Wärmetauschers 100 ist es auch möglich, dass jede der beiden Spiralen jeweils anteilig die Hälfte (also drei oder dergleichen) der äußeren Wärmetauscher 200 versorgt. Dafür sind entsprechende Anschlusselemente vorzusehen, die dem Fachmann jedoch allgemein bekannt sind.
- Der innere Wärmetauscher 100 kann auch derart gestaltet sein, dass zusätzlich oder anstelle der Spirale oder der Doppelhelix eine Mehrfach-Helix vorgesehen ist.
- Zumindest einer der äußeren Wärmetauscher 200 kann derart gestaltet sein, dass anstelle oder zusätzlich zu der Spirale 208 eine Doppelhelix und/oder eine

Mehrfach-Helix vorgesehen ist. Die zugehörigen Anschlüsse können ähnlich vorgesehen sein, wie im Zusammenhang mit dem inneren Wärmetauscher 100 erläutert.

### Bezugszeichenliste

- 10: Gebäude
- 11: Behälter für Energiespeicher (auch Wärmespeicher genannt)
- 12: Wandung von 11
- 13: Erdoberfläche
- 14: Wasser
- 16: Wasseroberfläche
- 18: Luftraum
- 20: Überlauf
- 22: erste Wärmetauscheranordnung
- 24: erstes Leitungssystem
- 25: Wärmetauscher-Zuleitung
- 25, b: erste bzw. zweite Teilzuleitung
- 26: Wärmetauscher-Rückleitung
- 27: Wärmepumpe
- 28: zweites Leitungssystem
- 30: Solar-Wärmetauscheranordnung
- 32: Leitungssystem zu 34
- 34: Solarkollektor
- 50; 50a, b: Wärmetauscher-Verbindungsleitungen

- 100: innerer Wärmetauscher
- 102: zentrales Standrohr von 100
- 104: Außenstützen von 100
- 106: Querstreben von 100
- 108: Spirale von 100
- 108a, b: Spiralen einer Doppelhelix
- 109: oberes Endstück von 108 (Abfluss)
- 110: Zuleitung von 108
- 110a, b: Zuleitungen einer Doppelhelix
- 111: Ableitung von 108
- 112: Zufluss von 110
- 114: unteres Endstück von 108 (Zufluss)
- 116: Verteilerelement
- 117: Ventile
- 118: Ableitungen von 116
- 120: mittlere Eisablagerung

- 200: äußerer Wärmetauscher
- 201: erster Anschluss von 210 (Zufluss)
- 202: zentrales Standrohr von 200
- 204: Außenstützen von 200
- 206: Querstreben von 200
- 208: Spirale von 200
- 210: erste Rohrschlange
- 211: Ableitung von 208
- 212: zweite Rohrschlange
- 214: unteres Endstück von 208 (Zufluss)
- 216: oberes Endstück von 208 (Abfluss)
- 217: Ventile
- 218: Sammlerelement
- 220: äußere Eisablagerung
- 302, 304: mechanische Verbindungselemente

## Patentansprüche

1. Wärmetauschervorrichtung für einen Energiespeicher mit einer ersten Wärmetauscheranordnung (22), die mindestens einen Wärmetauscher (100) einer ersten Bauart sowie mindestens einen Wärmetauscher (200) einer zweiten Bauart aufweist, wobei
- der Wärmetauscher (100) der ersten Bauart einen ersten Leitungsabschnitt enthält, der spiralförmig verläuft und so eine Spirale (108) bildet, wobei der erste Leitungsabschnitt an seinem ersten Endstück (114) direkt oder indirekt verbunden ist mit einer Zuleitung (110), über die der erste Leitungsabschnitt mit einem flüssigen Übertragungsmedium gespeist werden kann,
- der erste spiralförmig verlaufende Leitungsabschnitt an seinem zweiten Endstück (109) direkt oder indirekt verbunden ist mit dem Eingang einer ersten Ableitung (118),
- der Ausgang der ersten Ableitung (118) direkt oder indirekt verbunden ist mit dem ersten Anschluss (201) des Wärmetauschers (200) der zweiten Bauart,
- das zweite Endstück (216) des Wärmetauschers (200) der zweiten Bauart direkt oder indirekt verbunden ist mit einer Wärmetauscher-Rückleitung (26),
- die Zuleitung (110) innerhalb der Spirale (108) verläuft und
- die Verbindung zwischen dem ersten Endstück (114) und der Zuleitung (110) sich bei betriebsbereitem Zustand der Vorrichtung am unteren Ende der Spirale (108) befindet,
**dadurch gekennzeichnet, dass** der Wärmetauscher (200) der zweiten Bauart einen zweiten Leitungsabschnitt aufweist, der spiralförmig verläuft und so eine zweite Spirale (208) bildet, und dass er derart gestaltet ist, dass innerhalb der zweiten Spirale (208) seine Wärmetauscherfläche erhöht ist.

2. Vorrichtung nach Anspruch 1, **dadurch gekennzeichnet, dass** die erste Ableitung (118) innerhalb der Spirale (108) derart verläuft, dass bei betriebsbereitem Zustand der Vorrichtung sich der Eingang der ersten Ableitung (118) oberhalb von dem Ausgang der ersten Ableitung (118) befindet.

3. Vorrichtung nach einem der vorigen Ansprüche, **dadurch gekennzeichnet, dass** innerhalb des Wärmetauschers (200) der zweiten Bauart eine erste u-förmige Rohrschlange (210) sowie mindestens eine weitere u-förmige Rohrschlange (212) vorgesehen sind, wobei die erste u-förmige Rohrschlange (210)
• hydraulisch zwischen einem ersten Anschluss (201) dieses Wärmetauschers (200) und dem zweiten spiralförmig verlaufenden Leitungsabschnitt (208) angeordnet ist und
• mechanisch innerhalb der Spirale (208) angeordnet ist und die mindestens eine weitere u-förmige Rohrschlange (212) hydraulisch zwischen der ersten u-förmigen Rohrschlange (210) und dem zweiten spiralförmig verlaufenden Leitungsabschnitt (208) angeordnet ist und mechanisch innerhalb der Spirale (208) angeordnet ist.

4. Vorrichtung nach einem der vorigen Ansprüche, **dadurch gekennzeichnet, dass** eine zweite Wärmetauscheranordnung (30) vorgesehen ist, die zumindest bei betriebsbereitem Zustand in thermischen Kontakt zu der ersten Wärmetauscheranordnung (22) ist und gespeist wird durch eine thermische Quelle (34), die als Solarkollektor, Wärmepumpe und/oder dergleichen ausgebildet ist.

5. Vorrichtung nach einem der vorigen Ansprüche, **dadurch gekennzeichnet, dass** die Wärmetauscher (100, 200) innerhalb eines Raumes (11) angeordnet sind, der einen Überlauf (16) aufweist und der in seinem unteren Bereich bis zu dem Überlauf (16) mit einem Speichermedium (14) gefüllt werden kann.

6. Vorrichtung nach einem der vorigen Ansprüche, **dadurch gekennzeichnet, dass** die zweite Wärmetauscheranordnung (30) innerhalb desselben Raumes (11) angeordnet ist wie die übrigen Wärmetauscher (100, 200).

7. Vorrichtung nach einem der vorigen Ansprüche, **dadurch gekennzeichnet, dass** mindestens zwei der Wärmetauscher (200) der zweiten Bauart vorhanden sind und dass der Wärmetauscher (100) der ersten Bauart zwischen denen (200) der zweiten Bauart angeordnet ist.

8. Vorrichtung nach einem der vorigen Ansprüche, **dadurch gekennzeichnet, dass** sechs Wärmetauscher (200) der zweiten Bauart vorhanden sind, diese mechanisch in Form eines Sechsecks angeordnet sind und sich innerhalb dieses Sechsecks mindestens ein Wärmetauscher (100) der ersten Bauart befindet.

9. Vorrichtung nach einem der vorigen Ansprüche, **dadurch gekennzeichnet, dass** der erste spiralförmige Leitungsabschnitt des Wärmetauschers (100) der ersten Bauart als Doppel- oder Mehrfachhelix (108a, 108b) ausgebildet ist und jeder dieser Helixleitungen (108a, 108b) durch eine eigene Zuleitung (110a, 110b) gespeist wird und diese Zuleitungen (110a, 110b) mechanisch innerhalb der Spirale angeordnet sind, die durch diese Doppel- bzw. Mehrfachhelix gebildet wird.

10. Vorrichtung nach einem der vorigen Ansprüche, **dadurch gekennzeichnet, dass** der zweite spiralförmige Leitungsabschnitt des Wärmetauschers (200) der zweiten Bauart als Doppel- oder Mehrfachhelix ausgebildet ist und die mindestens eine u-förmige Rohrschlange (210) mechanisch innerhalb der Spirale angeordnet ist, die durch diese Doppel- bzw. Mehrfachhelix gebildet wird.

11. Vorrichtung nach einem der vorigen Ansprüche, **dadurch gekennzeichnet, dass** der Wärmetauscher (100) erster Bauart ein zentrales Standrohr (102) aufweist, an dem mittels geeigneter Befestigungsmittel (106) Außenstützen (104) mechanisch befestigt sind und dass das Standrohr (102), die Befestigungsmittel (106) und/oder die Außenstützen (104) derart gestaltet sind, dass darin ein Material eingefüllt werden kann, dessen Dichte größer ist als die Dichte des flüssigen Speichermediums (14), das den Wärmetauscher (100) umgibt.

12. Vorrichtung nach einem der vorigen Ansprüche, **dadurch gekennzeichnet, dass** der Wärmetauscher (200) zweiter Bauart ein zentrales Standrohr (202) aufweist, an dem mittels geeigneter Befestigungsmittel (206) Außenstützen (204) mechanisch befestigt sind und dass das Standrohr (202), die Befestigungsmittel (206) und/oder die Außenstützen (204) derart gestaltet sind, dass darin ein Material eingefüllt werden kann, dessen Dichte größer ist als die Dichte des flüssigen Speichermediums (14), das den Wärmetauscher (200) umgibt.

13. Vorrichtung nach einem der vorigen Ansprüche, **dadurch gekennzeichnet, dass** die Höhe (H) der Wärmetauscher (100) der ersten Bauart und die der Wärmetauscher (200) der zweiten Bauart im Wesentlichen gleich ist und bevorzugterweise einen Wert hat, der im Bereich zwischen 1,80 und 2,20 Metern liegt.

14. Vorrichtung nach einem der vorigen Ansprüche, **dadurch gekennzeichnet, dass** die Höhe (h) der u-förmigen Rohrschlangen einen Wert hat, der zu der Höhe (H) der Wärmetauscher (200) der zweiten Bauart in folgendem Verhältnis steht: h / H = 1/2 bis 2/3.

15. Vorrichtung nach einem der vorigen Ansprüche, **dadurch gekennzeichnet, dass** die Wicklungsdichte der Spirale des Wärmetauschers (200) der zweiten Bauart im Bereich der mindestens einen u-förmigen Rohrschlange höher ist als außerhalb davon.

16. Vorrichtung nach einem der vorigen Ansprüche, **dadurch gekennzeichnet, dass** die erste Wärmetauscheranordnung (22) und/oder die zweite Wärmetauscheranordnung (30) innerhalb eines Behälters (11) mit einer Wandung (12) angeordnet sind und dass zumindest eine der beiden Wärmetauscheranordnungen (22; 30) mechanisch nicht an der Wandung (12) montiert ist.

## Claims

1. Heat exchanger device for an energy store, having a first heat exchanger arrangement (22) which has at least one heat exchanger (100) of a first type of construction and at least one heat exchanger (200) of a second type of construction, wherein
- the heat exchanger (100) of the first type of construction comprises a first line portion which runs in spiral-shaped fashion and thus forms a spiral (108), wherein the first line portion is, at its first end piece (114), connected directly or indirectly to a feed line (110) via which the first line portion can be fed with a liquid transfer medium,
- the first line portion which runs in spiral-shaped fashion is, at its second end piece (109), connected directly or indirectly to the inlet of a first discharge line (118),
- the outlet of the first discharge line (118) is connected directly or indirectly to the first port (201) of the heat exchanger (200) of the second type of construction,
- the second end piece (216) of the heat exchanger (200) of the second type of construction is connected directly or indirectly to a heat exchanger return line (26),
- the feed line (110) runs within the spiral (108), and
- the connection between the first end piece (114) and the feed line (110) is, in the operationally ready state of the device, situated at the lower end of the spiral (108),
**characterized in that** the heat exchanger (200) of the second type of construction has a second line portion which runs in spiral-shaped fashion and thus forms a second spiral (208), and **in that** said heat exchanger is designed such that its heat exchanger area is increased within the second spiral (208).

2. Device according to Claim 1, **characterized in that** the first discharge line (118) runs within the spiral (108) such that, in the operationally ready state of the device, the inlet of the first discharge line (118) is situated above the outlet of the first discharge line (118).

3. Device according to any of the preceding claims, **characterized in that** a first U-shaped serpentine tube (210) and at least one further U-shaped serpentine tube (212) are provided within the heat exchanger (200) of the second type of construction, wherein the first U-shaped serpentine tube (210)
• is arranged hydraulically between a first port (201) of said heat exchanger (200) and the second line portion (208) running in spiral-shaped fashion and
• is arranged mechanically within the spiral (208), and
the at least one further U-shaped serpentine tube (212) is arranged hydraulically between the first U-shaped serpentine tube (210) and the second line portion (208) running in spiral-shaped fashion and is arranged mechanically within the spiral (208).

4. Device according to any of the preceding claims, **characterized in that** a second heat exchanger arrangement (30) is provided which, at least in an operationally ready state, is in thermal contact with the first heat exchanger arrangement (22) and is fed by a thermal source (34) in the form of a solar collector, heat pump and/or the like.

5. Device according to any of the preceding claims, **characterized in that** the heat exchangers (100, 200) are arranged within a space (11) which has an overflow (16) and which, in its lower region, can be filled up to the overflow (16) with a storage medium (14).

6. Device according to any of the preceding claims, **characterized in that** the second heat exchanger arrangement (30) is arranged within the same space (11) as the other heat exchangers (100, 200).

7. Device according to any of the preceding claims, **characterized in that** at least two of the heat exchangers (200) of the second type of construction are provided, and **in that** the heat exchanger (100) of the first type of construction is arranged between those (200) of the second type of construction.

8. Device according to any of the preceding claims, **characterized in that** six heat exchangers (200) of the second type of construction are provided, these are arranged mechanically in the form of a hexagon, and at least one heat exchanger (100) of the first type of construction is situated within said hexagon.

9. Device according to any of the preceding claims, **characterized in that** the first spiral-shaped line portion of the heat exchanger (100) of the first type of construction is in the form of a double or multiple helix (108a, 108b), and each of said helix lines (108a, 108b) is fed by a dedicated feed line (110a, 110b), and said feed lines (110a, 110b) are arranged mechanically within the spiral formed by said double or multiple helix.

10. Device according to any of the preceding claims, **characterized in that** the second spiral-shaped line portion of the heat exchanger (200) of the second type of construction is in the form of a double or multiple helix, and the at least one U-shaped serpentine tube (210) is arranged mechanically within the spiral formed by said double or multiple helix.

11. Device according to any of the preceding claims, **characterized in that** the heat exchanger (100) of the first type of construction has a central standpipe (102) to which outer supports (104) are mechanically fastened by suitable fastening means (106), and **in that** the standpipe (102), the fastening means (106) and/or the outer supports (104) are designed such that a material can be introduced therein, the density of which material is greater than the density of the liquid storage medium (14) surrounding the heat exchanger (100).

12. Device according to any of the preceding claims, **characterized in that** the heat exchanger (200) of the second type of construction has a second standpipe (202) to which outer supports (204) are mechanically fastened by suitable fastening means (206), and **in that** the standpipe (202), the fastening means (206) and/or the outer supports (204) are designed such that a material can be introduced therein, the density of which material is greater than the density of the liquid storage medium (14) surrounding the heat exchanger (200).

13. Device according to any of the preceding claims, **characterized in that** the height (H) of the heat exchangers (100) of the first type of construction and that of the heat exchangers (200) of the second type of construction is substantially equal and preferably has a value which lies in the range between 1.80 and 2.20 metres.

14. Device according to any of the preceding claims, **characterized in that** the height (h) of the U-shaped serpentine tubes has a value which, in relation to the height (H) of the heat exchangers (200) of the second type of construction, exhibits the following ratio: h / H = 1/2 to 2/3.

15. Device according to any of the preceding claims, **characterized in that** the winding density of the spiral of the heat exchanger (200) of the second type of construction is greater in the region of the at least one U-shaped serpentine tube than outside said region.

16. Device according to any of the preceding claims, **characterized in that** the first heat exchanger arrangement (22) and/or the second heat exchanger arrangement (30) are arranged within a container (11) with a wall (12), and **in that** at least one of the two heat exchanger arrangements (22; 30) is mechanically not mounted on the wall (12).

## Revendications

1. Dispositif échangeur de chaleur, destiné à un accumulateur d'énergie, comprenant un premier ensemble d'échangeurs de chaleur (22) qui comporte au moins un échangeur de chaleur (100) d'un premier type et au moins un échangeur de chaleur (200) d'un deuxième type,
- l'échangeur de chaleur (100) du premier type contenant une première section de conduite qui s'étend en spirale et forme ainsi une spirale (108), la première section de conduite étant reliée au niveau de sa première pièce d'extrémité (114) directement ou indirectement à une conduite d'alimentation (110) permettant d'alimenter la première section de conduite avec un milieu de transfert liquide,
- le première section de conduite s'étendant en spirale étant reliée au niveau de sa deuxième pièce d'extrémité (109) directement ou indirectement à l'entrée d'une première conduite de dérivation (118),
- la sortie de la première conduite de dérivation (118) étant reliée directement ou indirectement au premier raccord (201) de l'échangeur de chaleur (200) du deuxième type ;
- la deuxième pièce d'extrémité (216) de l'échangeur de chaleur (200) du deuxième type étant reliée directement ou indirectement à une conduite de retour d'échangeur de chaleur (26),
- la conduite d'alimentation (110) s'étendant à l'intérieur de la spirale (108) et
- la liaison entre la première pièce d'extrémité (114) et la conduite d'alimentation (110) se trouvant, à l'état prêt à fonctionner du dispositif, à l'extrémité inférieure de la spirale (108),
**caractérisé en ce que** l'échangeur de chaleur (200) du deuxième type comporte une deuxième section de conduite qui s'étend en spirale et forme ainsi une deuxième spirale (208) et **en ce qu'**il est conçu de telle sorte que sa surface d'échange de chaleur est accrue dans la deuxième spirale (208).

2. Dispositif selon la revendication 1, **caractérisé en ce que** la première conduite de dérivation (118) s'étend dans la spirale (108) de telle sorte que, à l'état prêt à fonctionner du dispositif, l'entrée de la première conduite de dérivation (118) se trouve au-dessus de la sortie de la première conduite de dérivation (118).

3. Dispositif selon l'une des revendications précédentes, **caractérisé en ce qu'**un premier serpentin tubulaire (210) en forme de U et au moins un autre serpentin tubulaire (212) en forme de U sont prévus à l'intérieur de l'échangeur de chaleur (200) du deuxième type, le premier serpentin (210) en forme de U étant disposé
• hydrauliquement entre un premier raccord (201) de cet échangeur de chaleur (200) et la deuxième section de conduite (208) s'étendant en spirale et
• mécaniquement à l'intérieur de la spirale (208) et l'au moins un autre serpentin tubulaire (212) en forme de U étant disposé hydrauliquement entre le premier serpentin tubulaire (210) en forme de U et la deuxième section de conduite (208) s'étendant en spirale et mécaniquement à l'intérieur de la spirale (208).

4. Dispositif selon l'une des revendications précédentes, **caractérisé en ce qu'**un deuxième ensemble d'échangeurs de chaleur (30) est prévu qui, au moins à l'état prêt à fonctionner, est en contact thermique avec le premier ensemble d'échangeurs de chaleur (22) et est alimenté par une source thermique (34) qui est conçue comme un capteur solaire, une pompe à chaleur et/ou similaire.

5. Dispositif selon l'une des revendications précédentes, **caractérisé en ce que** les échangeurs de chaleur (100, 200) sont disposés dans un espace (11) qui comporte un trop-plein (16) et qui peut être rempli dans sa partie inférieure jusqu'au trop-plein (16) avec un milieu accumulateur (14).

6. Dispositif selon l'une des revendications précédentes, **caractérisé en ce que** le deuxième ensemble d'échangeurs de chaleur (30) est disposé dans le même espace (11) que les autres échangeurs de chaleur (100, 200) .

7. Dispositif selon l'une des revendications précédentes, **caractérisé en ce qu'**au moins deux des échangeurs de chaleur (200) du deuxième type sont présents et **en ce que** l'échangeur de chaleur (100) du premier type est disposé entre ceux (200) du deuxième type.

8. Dispositif selon l'une des revendications précédentes, **caractérisé en ce que** six échangeurs de chaleur (200) du deuxième type sont présents, en qu'ils sont disposés mécaniquement sous la forme d'un hexagone et **en ce qu'**au moins un échangeur de chaleur (100) du premier type se trouve à l'intérieur cet hexagone.

9. Dispositif selon l'une des revendications précédentes, **caractérisé en ce que** la première section de conduite en forme de spirale de l'échangeur de chaleur (100) du premier type est conçue comme une hélice double ou multiple (108a, 108b) et chacune de ces conduites hélicoïdales (108a, 108b) est alimentée par sa propre conduite d'alimentation (110a, 110b) et ces conduites d'alimentation (110a, 110b) sont disposées mécaniquement à l'intérieur de la spirale qui est formée par cette hélice double ou multiple.

10. Dispositif selon l'une des revendications précédentes, **caractérisé en ce que** la deuxième section de conduite s'étendant en spirale de l'échangeur de chaleur (200) du deuxième type est conçue comme une hélice double ou multiple et l'au moins un serpentin tubulaire (210) en forme de U est disposé mécaniquement à l'intérieur de la spirale qui est formée par cette hélice double ou multiple.

11. Dispositif selon l'une des revendications précédentes, **caractérisé en ce que** l'échangeur de chaleur (100) du premier type comporte un tuyau vertical central (102) auquel des supports extérieurs (104) sont fixés mécaniquement à l'aide de moyens de fixation appropriés (106) et **en ce que** le tuyau vertical (102), les moyens de fixation (106) et/ou les supports extérieurs (104) sont conçus de manière à pouvoir être remplis d'un matériau dont la densité est supérieure à la densité du milieu accumulateur liquide (14) qui entoure l'échangeur de chaleur (100).

12. Dispositif selon l'une des revendications précédentes, **caractérisé en ce que** l'échangeur de chaleur (200) du deuxième type comporte un tuyau vertical central (202) auquel des supports extérieurs (104) sont fixés mécaniquement à l'aide de moyens de fixation appropriés (206) et **en ce que** le tuyau vertical (202), les moyens de fixation (206) et/ou les supports extérieurs (204) sont conçus de manière à pouvoir être remplis d'un matériau dont la densité est supérieure à la densité du milieu accumulateur liquide (14) qui entoure l'échangeur de chaleur (200).

13. Dispositif selon l'une des revendications précédentes, **caractérisé en ce que** la hauteur (H) de l'échangeur de chaleur (100) du premier type et celle de l'échangeur de chaleur (200) du deuxième type sont sensiblement égales et ont de préférence une valeur comprise entre 1,80 et 2,20 mètres.

14. Dispositif selon l'une des revendications précédentes, **caractérisé en ce que** la hauteur (h) des serpentins tubulaires en forme de U a une valeur satisfaisant au rapport suivant à la hauteur (H) de l'échangeur de chaleur (200) du deuxième type : h/H = 1/2 à 2/3.

15. Dispositif selon l'une des revendications précédentes, **caractérisé en ce que** la densité d'enroulement de la spirale de l'échangeur de chaleur (200) du deuxième type est plus grande dans la zone de l'au moins un serpentin tubulaire en forme de U qu'à l'extérieur de celle-ci.

16. Dispositif selon l'une des revendications précédentes, **caractérisé en ce que** le premier ensemble d'échangeurs de chaleur (22) et/ou le deuxième ensemble d'échangeurs de chaleur (30) sont disposés dans un récipient (11) pourvu d'une paroi (12) et **en ce que** l'un au moins des deux ensembles d'échangeurs de chaleur (22, 30) n'est pas monté mécaniquement à la paroi (12).
